# DEMANDE DE BREVET EUROPEEN

(11) **EP 1 085 369 A1**
(43) Date de publication de la demande: **21.03.2001**
(21) Numéro de dépôt: 00402469.1
(22) Date de dépôt: 07.09.2000
(51) Int. Cl.: G03B 27/58

(54) **Dispositif pour la réalisation d'une bordure noire ou colorée lors du tirage d'une photographie**

(30) Priorité: 14.09.1999 FR 9911498
(71) Demandeur: Pinte, Thierry, 78 850 Thiverval (FR)
(72) Inventeur: Pinte, Thierry, 78 850 Thiverval (FR)
(74) Mandataire: de Saint-Palais, Arnaud Marie

(57) **Abrégé**

Ce dispositif comprend des moyens d'éclairage (9) pour produire au moins un faisceau lumineux, des moyens de répartition et d'homogénéisation du faisceau lumineux ayant la forme d'un cadre (1) au moins en partie en une matière transparente, et définissant une fenêtre au format et dimensions des tirages photographiques à réaliser sur le papier photosensible (5), des moyens de masquage définissant un motif de bordure à former sur le papier photosensible (5) lors du tirage du film (12), ces moyens disposés contre la face du cadre (1) en regard du papier photosensible (5), des moyens de commande (8) des moyens d'éclairage (9) pour appliquer le faisceau lumineux le long des bords du papier photosensible (5), au travers des moyens de masquage pendant une période d'exposition adaptée au papier photosensible pour obtenir sur celui-ci une bordure correspondant au motif défini par les moyens de masquage, à l'issue du traitement de tirage du film, et ayant une intensité homogène.

## Description

La présente invention concerne un dispositif permettant la réalisation d'une ou plusieurs bordures noires, grises ou en couleur, encadrant la photographie, lors de son tirage sur papier photosensible.

Elle s'applique notamment, mais non exclusivement, aux systèmes de tirage photographique automatisés ou semi-automatisés, en couleurs ou en noir et blanc.
Un tel système comprend notamment une lampe d'exposition, un support de film photographique, un système de lentilles pour focaliser le faisceau lumineux produit par la lampe et passant au travers du film à un emplacement d'exposition où l'on amène le papier photosensible, et produire ainsi une image d'une vue du film sur le papier photosensible, et un obturateur disposé sur le trajet du faisceau lumineux, permettant de commander le temps d'exposition du papier au faisceau lumineux. Le film est automatiquement déroulé au travers du faisceau lumineux, tandis que le papier photosensible, par exemple sous la forme d'une bande, passe sur l'emplacement d'exposition. Ce système comprend également un dispositif de commande qui synchronise la commande de l'obturateur, l'entraînement de la bande de papier photosensible et le déroulement du film à développer.

Avec un tel système automatisé, on sait réaliser lors du tirage sur papier photosensible, une bordure blanche encadrant la photographie. Pour cela, il suffit de focaliser l'image de la vue du film à une longueur inférieure à la largeur de la bande de papier photosensible, de manière à ne pas exposer la bordure de la bande avec l'image de la photographie. Par contre, il est beaucoup moins aisé de réaliser une telle bordure en noir ou en couleur, car il faut en plus exposer la bordure de la photographie, soit avec une lumière blanche, soit avec une lumière colorée.
Une telle bordure peut facilement être réalisée manuellement, lorsqu'on utilise un appareil d'agrandissement classique. Il suffit pour cela d'utiliser un 0, que l'on dispose sur le papier photosensible avant ou après son exposition à l'image de la vue à développer. Ce masque exposant uniquement la partie de bordure que l'on souhaite colorer ou noircir. Il s'agit ensuite de choisir la couleur de la bordure en disposant éventuellement des filtres sur le trajet du faisceau lumineux d'exposition de l'appareil d'agrandissement.

Il apparaît immédiatement que la qualité du résultat dépend de la précision avec laquelle les masques sont réalisés et disposés sur le papier photosensible. En outre, la réalisation d'une telle bordure implique de nombreuses manipulations qui induisent nécessairement une augmentation sensible du coût du tirage photographique et qui sont totalement exclues dans les systèmes de tirage photographiques automatiques. Il n'est également pas possible de poser le masque sur le papier photosensible, puisque celui-ci est entraîné, le frottement du masque sur le papier risquant de former sur celui-ci des rayures ou sursensibilisation.

La présente invention a pour but de supprimer ces inconvénients. A cet effet, elle propose un dispositif pour la formation d'une bordure noire ou colorée lors du tirage d'un film photographique sur papier photosensible, par un système de tirage automatique du type de celui décrit ci-avant.

Selon l'invention, ce dispositif est caractérisé en ce qu'il comprend :
- des moyens d'éclairage pour produire au moins un faisceau lumineux,
- des moyens de répartition et d'homogénéisation du faisceau lumineux ayant la forme d'un cadre définissant une fenêtre au format et dimensions des tirages photographiques sur du papier photosensible,
- des moyens de masquage définissant un motif de bordure à former sur le papier photosensible lors du tirage du film, ce masque étant disposé contre la surface du cadre en regard du papier photosensible,
- des moyens de commande des moyens d'éclairage pour appliquer le faisceau lumineux le long des bords du papier photosensible, au travers des moyens de masquage pendant une période d'exposition adaptée au papier photosensible, pour obtenir sur celui-ci une bordure correspondant au motif défini par le masque à l'issue du traitement de tirage du film, et ayant une intensité homogène.

Le dispositif selon l'invention permet ainsi de réaliser une ou plusieurs bordures colorées ou noires sur des tirages photographiques sur papier photosensible, éventuellement en alternance avec une ou plusieurs bordures blanches. La couleur de cette bordure dépend de la couleur de la lumière produite par les moyens de génération et du type de papier photosensible utilisé. Ce dispositif. peut être installé dans un système existant, moyennant de simples modifications mineures du système. Grâce à son cadre de répartition de la lumière, il est particulièrement conçu pour être installé dans une machine automatique de tirage photographique, dans lequel l'exposition de la partie centrale du papier photosensible à l'image à développer et l'exposition des bordures à la lumière traversant le masque peuvent être simultanées.

A cet effet, avantageusement, les moyens de commande des moyens d'éclairage sont synchronisés avec les moyens de commande de l'obturateur du système de tirage automatique.

Selon une particularité de l'invention, les moyens d'éclairage comprennent une pluralité de diodes électroluminescentes régulièrement réparties le long des bords du cadre, la longueur d'onde de la lumière émise par les diodes étant choisie en fonction de la couleur souhaitée de la bordure.

Alternativement, les moyens d'éclairage comprennent un réseau de fibres optiques. Dans ce cas, la lumière appliquée à l'entrée des fibres optiques peut être produite par tout moyen, de préférence en fonction de la couleur dominante de la photographie appliquée en parallèle sur le papier photosensible.

Pour limiter le nombre de fibres à utiliser, celles-ci peuvent être traitées de manière à laisser passer la lumière, non seulement à leur extrémité, mais également le long d'une bande longitudinale. Dans ce cas, elles sont disposées parallèlement aux contours du cadre.

Avantageusement, la couleur de la ou des bordures est choisie de manière à correspondre à la couleur complémentaire de la couleur dominante de la photographie.

Selon une autre particularité de l'invention, pour éviter la formation de rayures provoquées par le défilement du papier photosensible sous le cadre, tout en permettant un transfert précis du motif de la bordure sur le papier, la hauteur du cadre au-dessus de l'emplacement d'exposition est réglable et correspond sensiblement à l'épaisseur du papier photosensible utilisé.

Un mode de réalisation du dispositif selon l'invention sera décrit ci-après, à titre d'exemple non limitatif, avec référence aux dessins annexés dans lesquels
La figure 1 représente schématiquement en coupe transversale une partie d'un système de tirage automatique de photographies sur papier photosensible, équipé d'un dispositif de réalisation d'une bordure selon l'invention ;
La figure 2 montre la vue de dessus d'un cadre du dispositif selon l'invention représenté sur la figure 1 ;
La figure 3 montre en vue de dessus une variante du cadre du dispositif représenté sur la figure 1 ;
Les figures 4 à 6 montrent en coupe transversale trois variantes de réalisation du cadre ;
La figure 7 montre un exemple de masque définissant le motif à former sur les bordures de chaque tirage photographique.

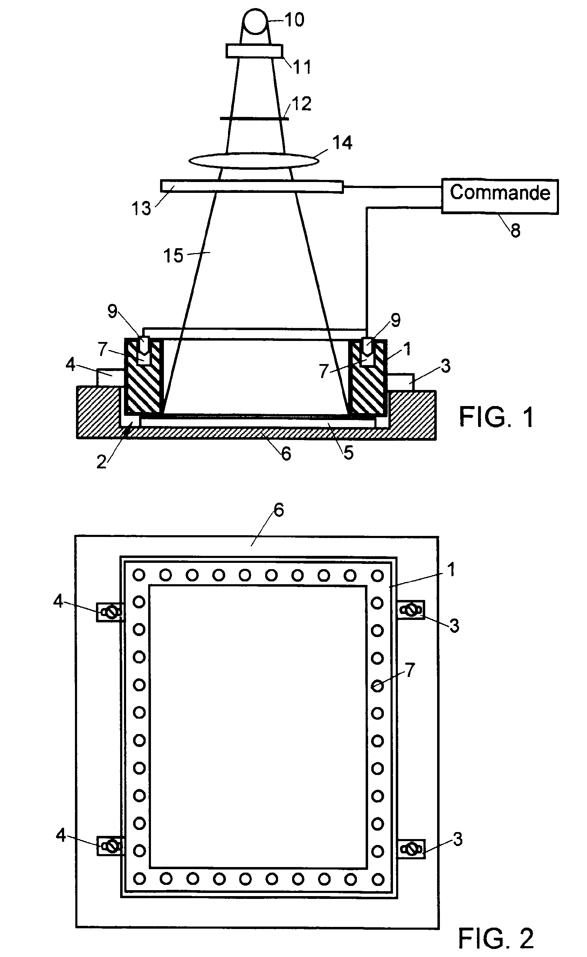

Sur la figure 1, un système de tirage comprend d'une manière connue une source de lumière blanche 10 qui éclaire une vue d'un film 12 à développer, éventuellement par l'intermédiaire d'un système de filtres 11. Le faisceau lumineux 15 qui passe au travers de la vue du film à développer est appliqué par l'intermédiaire d'un dispositif de focalisation 14 et d'un obturateur 13 à un emplacement d'exposition 2 où passe une bande 5 de papier photosensible. Le dispositif de focalisation 14 permet de former une image nette de la vue à développer à une largeur inférieure ou égale à celle de la bande de papier photosensible utilisée, située à l'emplacement d'exposition 2. L'obturateur 13 permet de commander le temps d'exposition du papier photosensible 5 situé à l'emplacement d'exposition 2, à la lumière passant au travers de la vue du film 12.
Dans le cas d'un système de tirage en couleur, le système de filtres 11 peut être automatiquement commandé en fonction de la couleur dominante de la vue à développer, mesurée sur le faisceau lumineux 15 ayant traversé le film 12.

Un système de tirage automatique comprend également, d'une manière connue, un premier dispositif d'entraînement (non représenté) pour commander le défilement des vues du film 12 devant l'ouverture de l'obturateur 13, ainsi qu'un second dispositif d'entraînement (non représenté) pour entraîner la bande de papier photosensible à l'emplacement d'exposition 2, puis vers un poste de traitement chimique du papier photosensible (non représenté), et un poste de découpe de la bande (non représenté) pour découper la bande entre chaque tirage photographique.

L'entraînement du film à développer 12 et de la bande de papier photosensible 5 et la commande de l'obturateur 13 sont synchronisés de manière à déclencher l'obturateur lorsqu'une nouvelle vue de film est amenée en regard de l'ouverture de l'obturateur et lorsqu'une zone non exposée de la bande 5 est amenée à l'emplacement d'exposition 2.

Selon l'invention, le système de tirage est équipé d'un dispositif permettant de réaliser une ou plusieurs bordures colorées ou noires tout autour de la zone d'exposition du papier photosensible. Ce dispositif comprend un cadre rectangulaire 1 disposé horizontalement et définissant une fenêtre centrale rectangulaire, au format et dimensions de l'image à former sur le papier photosensible. Cette fenêtre laisse passer la lumière d'exposition provenant du dispositif de focalisation 14 et de l'obturateur 13 sur la zone à exposer de la bande de papier, disposée à l'emplacement d'exposition 2.

Le cadre 1 est réalisé au moins en partie dans un matériau transparent choisi de manière à répartir uniformément un ou plusieurs faisceaux lumineux transmis à l'intérieur du cadre, et éclairer avec une intensité homogène la face inférieure du cadre. Sur cette face inférieure plane, est fixé un masque comportant une partie opaque à la lumière, et une partie transparente ayant la forme du motif de la bordure à former sur le papier photosensible. Les autres faces du cadre, c'est-à-dire ses faces latérales intérieures et extérieures et sa face supérieure sont opaques ou réfléchissantes de manière à ne pas laisser sortir la lumière appliquée à l'intérieur du cadre.

Le cadre 1 doit être fixé au-dessus de l'emplacement d'exposition 2, ni trop près pour permettre le défilement de la bande de papier photosensible sous le cadre sans que celui-ci puisse rayer le papier, et ni trop loin pour pouvoir obtenir un transfert correct et précis du motif de la bordure à former sur le papier. A cet effet, le cadre 1 est bloqué dans un bâti 6 par des cales 3, 4 permettant un réglage précis de la hauteur du cadre 1. Ces cales permettent également d'ajuster l'orientation du cadre par rapport aux bords opposés de la bande de papier 5.

La hauteur et l'orientation du cadre 1 au-dessus de l'emplacement d'exposition 2 peuvent être réglées en disposant une partie de la bande à l'emplacement d'exposition, et en posant le cadre sur la bande. Il suffit alors de serrer les cales 3, 4 contre le bâti, par exemple au moyen de vis traversant des perçages oblongs réalisés dans les cales 3, 4 (figure 2).

Alternativement, le cadre 1 peut être monté mobile entre deux positions, à savoir une position plaquée sur le papier lors de l'exposition de celui-ci, et une position rétractée permettant l'avance du papier sans risque d'abrasion de ce dernier. Le déplacement du cadre entre ces deux positions est effectué par un actionneur approprié tel qu'un électro-aimant, dont la commande est synchronisée avec le reste du système, par exemple avec la commande de l'obturateur 13.

Selon une première variante de réalisation de l'invention représentée sur la figure 2, la face supérieure du cadre 1 comprend une pluralité d'alvéoles 7 dans lesquelles sont disposées respectivement des diodes électroluminescentes 9, l'allumage de ces diodes étant commandé par le dispositif de commande 8, de manière à être déclenché lors de l'ouverture de l'obturateur 13. Le dispositif de commande est avantageusement conçu de manière à maintenir les diodes 9 allumées pendant un certain temps prédéterminé indépendant de la durée d'ouverture de l'obturateur 13.

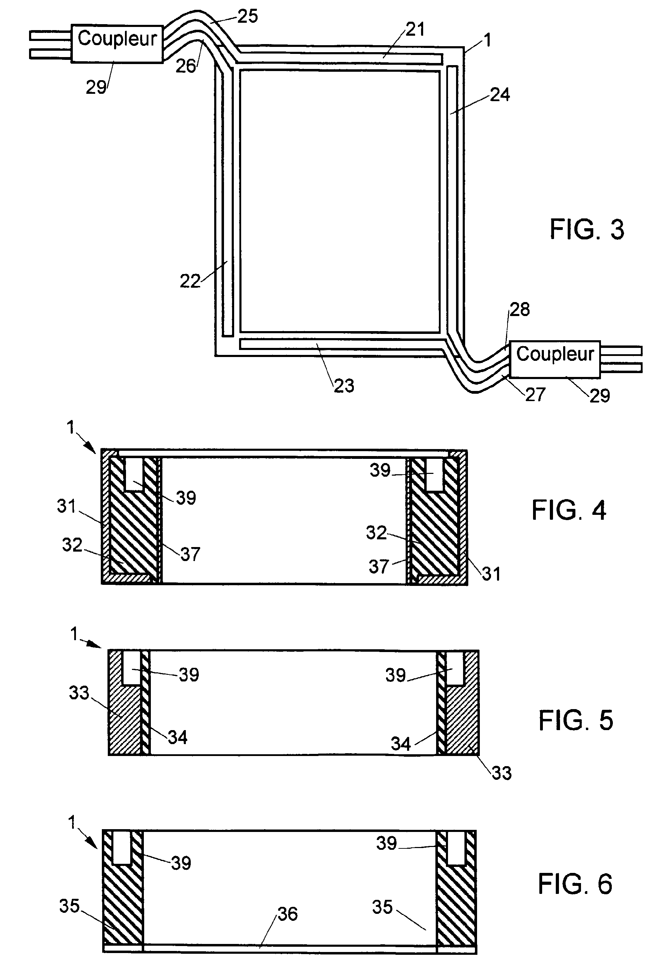

Selon une seconde variante de réalisation de l'invention représentée sur la figure 3, le cadre 1 est éclairé par un réseau de fibres optiques, de préférence quatre fibres optiques 21 à 24, une pour chaque bord du cadre. Ces fibres optiques présentent chacune une partie d'extrémité s'étendant tout le long d'un bord respectif du cadre, la surface longitudinale de cette partie des fibres étant traitée de manière à laisser sortir d'une manière uniforme la lumière qu'elles transmettent. On peut prévoir d'encastrer les parties d'extrémité des fibres 21 à 24 dans des gorges respectives réalisées le long des bords du cadre.
Les autres parties d'extrémité 25 à 28 des fibres 21 à 24 sont regroupées et disposées à proximité d'une source de lumière dont la couleur est choisie en fonction de la couleur de la bordure que l'on souhaite réaliser sur le papier photosensible. Cette source de lumière est commandée de manière à s'allumer au moment de l'ouverture de l'obturateur 13.

Avantageusement, la couleur de cette source de lumière est commandée de manière à correspondre à une couleur déterminée en fonction de la couleur dominante de la photographie, par exemple la couleur complémentaire.

A cet effet, l'entrée des fibres optiques peut être disposée de manière à capter une faible partie du faisceau lumineux en sortie du système de filtre 11, avant son passage au travers du film. Les fibres passent au travers d'un coupleur optique 29 commandé par le dispositif de commande 8, de manière à déclencher le passage de la lumière dans les fibres en direction du cadre 1 pendant un temps d'exposition prédéfini.

De même, dans le cas d'un tirage en noir et blanc, ce dispositif permet également d'ajuster l'intensité de la bordure qui peut ainsi être réalisée en gris.

La figure 4 montre en détail une première variante de réalisation du cadre 1. Sur cette figure, le cadre comprend deux cadres assemblés l'un à l'autre par exemple par collage, à savoir un premier cadre 32 réalisé dans un matériau transparent, apte à répartir la lumière de manière homogène, tel que du plexiglas, et un second cadre 31 réalisé dans un matériau opaque et résistant, tel que du métal ou une matière plastique. Ces deux cadres sont assemblés de manière à ce que le second cadre enveloppe les faces latérales extérieures, et une partie des faces supérieure et inférieure du premier cadre. La face inférieure du premier cadre est usinée de manière à ce que la partie du second cadre 31 recouvrant cette face soit encastrée dans le premier cadre 32, et forme avec celui-ci une face plane. La partie non recouverte de la face inférieure du premier cadre 32 définit le motif de bordure à réaliser sur les tirages photographiques.

Comme précédemment, la face supérieure du premier cadre 32 comporte des alvéoles ou gorges 39, pour encastrer les diodes 9 ou les fibres 21 à 24.

Les faces latérales intérieures du premier cadre 32 sont traitées de manière à être opaques à la lumière, et éventuellement réfléchissantes côté intérieur, par exemple au moyen d'une peinture ou d'un vernis adéquat.
Alternativement, les faces latérales intérieures du premier cadre 32 peuvent être recouvertes par des plaques opaques 37, par exemple métalliques ou en une matière plastique. Cette disposition permet d'obtenir sur le tirage photographique une double bordure blanche et colorée ou noire, encadrant la photographie, la bordure blanche encadrant la photographie et étant située sous les plaques opaques intérieures 37 du cadre 1, la bordure colorée ou noire encadrant la bordure blanche et étant située sous la partie non recouverte de la face inférieure du premier cadre 32.

Bien entendu, les parties rectilignes formant les deux cadres 31, 32 peuvent être réalisées par des pièces distinctes rectilignes et profilées, qui sont assemblées de manière à former les cadres.

Dans la seconde variante de réalisation représentée sur la figure 5, le cadre 1 est également constitué de deux cadres de mêmes hauteurs, l'un 34 étant transparent, l'autre 33 opaque. Le cadre transparent 34 est réalisé à partir de plaques dont l'épaisseur correspond à la largeur des bordures à réaliser sur les tirages photographiques, le cadre opaque étant réalisé à partir d'un barreau de section rectangulaire. Ce barreau est usiné de manière à former la gorge ou les alvéoles 39, une paroi de cette gorge ou ces alvéoles étant formée par une des plaques transparentes du second cadre.

Comme pour la première variante, les faces latérales intérieures du second cadre 34 sont traitées de manière à être opaques à la lumière, et éventuellement réfléchissantes côté intérieur, ou recouvertes de plaques opaques.

Dans la troisième variante de réalisation représentée sur la figure 6, le cadre 1 est réalisé à partir d'un seul cadre 35 en une matière transparente, dont la face supérieure comporte des alvéoles ou une gorge 39.
Comme précédemment, les faces latérales intérieures du cadre 35 sont traitées de manière à être opaques à la lumière, et éventuellement réfléchissantes côté intérieur, ou recouvertes de plaques opaques. Il en est de même des faces latérales extérieures qui peuvent également être masquées par un profilé métallique ou en matière plastique.

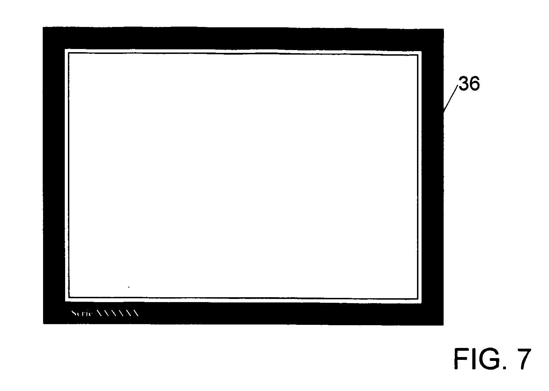

La face inférieure du cadre 35 est recouverte par un film 36 de faible épaisseur, de l'ordre d'un dixième de millimètre, partiellement transparent, définissant le motif de la bordure à réaliser sur les tirages photographiques. Un exemple de motif de bordure est représenté sur la figure 7.
Le motif de bordure à réaliser peut être formé sur le film 36 par une technique d'impression classique, par exemple au moyen d'une imprimante laser, à partir d'un film totalement transparent. De cette manière, il est donc très facile de réaliser n'importe quel motif de bordure. Cette bordure peut également comporter des inscriptions comme cela apparaît sur la figure 7.

Bien entendu la partie du film en regard de la fenêtre définie par le cadre 35 doit être retirée afin d'éviter le dépôt de poussières qui laisseraient alors des traces sur tous les tirages photographiques. Il est également préférable que la face imprimée du film soit disposée contre le cadre, de manière à éviter la disparition partielle de l'encre sur le film, due aux frottements résultant du défilement de la bande de papier photosensible.
Le film 36 peut être collé sur le cadre 35 par exemple au moyen d'une colle transparente adéquate.

## Revendications

1. Dispositif pour la formation d'au moins une bordure noire ou colorée lors du tirage d'un film photographique (12) sur du papier photosensible (5) par un système de tirage automatique du type comprenant un obturateur (13), un système de filtres (11) et des moyens de focalisation (14),
caractérisé en ce qu'il comprend :
- des moyens d'éclairage (9, 21 à 24) pour produire au moins un faisceau lumineux,
- des moyens de répartition et d'homogénéisation du faisceau lumineux ayant la forme d'un cadre (1) au moins en partie en une matière transparente, et définissant une fenêtre au format et dimensions des tirages photographiques à réaliser sur le papier photosensible (5),
- des moyens de masquage (31, 33, 36) définissant un motif de bordure à former sur le papier photosensible (5) lors du tirage du film (12), ces moyens disposés contre la face du cadre (1) en regard du papier photosensible (5),
- des moyens de commande (8, 29) des moyens d'éclairage (9, 21 à 24) pour appliquer le faisceau lumineux le long des bords du papier photosensible (5), au travers des moyens de masquage (31, 33, 36) pendant une période d'exposition adaptée au papier photosensible pour obtenir sur celui-ci une bordure correspondant au motif défini par les moyens de masquage, à l'issue du traitement de tirage du film, et ayant une intensité homogène.

2. Dispositif selon la revendication 1,
caractérisé en ce que les moyens commande (8, 29) des moyens d'éclairage sont synchronisés avec les moyens de commande (8) de l'obturateur (13) du système de tirage automatique, de manière à déclencher l'allumage des moyens d'éclairage (9, 21 à 24) au moment de l'ouverture de l'obturateur (13), et à maintenir ceux-ci allumés pendant un certain temps indépendamment de la fermeture de l'obturateur.

3. Dispositif selon la revendication 1 ou 2,
caractérisé en ce que les faces latérales intérieures du cadre (1) sont traitées de manière à être opaques à la lumière, et éventuellement réfléchissantes vers l'intérieur du cadre.

4. Dispositif selon l'une des revendications précédentes,
caractérisé en ce que les moyens d'éclairage comprennent une pluralité de diodes (9) électroluminescentes, régulièrement réparties le long des bords du cadre (1), la longueur d'onde de la lumière émise par les diodes étant choisie en fonction de la couleur souhaitée de la bordure.

5. Dispositif selon l'une des revendications 1 à 3,
caractérisé en ce que les moyens d'éclairage comprennent un réseau de fibres optiques (21 à 24).

6. Dispositif selon la revendication 5,
caractérisé en ce que la couleur de la lumière appliquée à l'entrée des fibres optiques (21 à 24) est déterminée en fonction de la couleur dominante de la photographie appliquée en parallèle sur le papier photosensible (5).

7. Dispositif selon la revendication 5 ou 6,
caractérisé en ce que la couleur de la lumière appliquée à l'entrée des fibres optiques (21 à 24) correspond à la couleur complémentaire de la couleur dominante de la lumière de la photographie appliquée en parallèle sur le papier photosensible (5).

8. Dispositif selon l'une des revendications 5 à 7,
caractérisé en ce que les fibres optiques (21 à 24) comprennent des parties respectives disposées parallèlement aux contours du cadre (1), ces parties étant traitées de manière à émettre de la lumière le long des bords du cadre.

9. Dispositif selon l'une des revendications précédentes,
caractérisé en ce qu'il comprend des moyens (3, 4) pour ajuster la position et la hauteur du cadre (1) au dessus du papier photosensible (5).

10. Dispositif selon l'une des revendications précédentes,
caractérisé en ce que le cadre (1) est monté mobile entre deux positions, à savoir une position plaquée sur le papier photosensible (5) lors de l'exposition de celui-ci, et une position rétractée permettant l'avance du papier sans risque d'abrasion de ce dernier.
